# EUROPEAN PATENT APPLICATION

(11) **EP 1 273 219 A1**
(43) Date of publication of application: **08.01.2003**
(21) Application number: 01202580.5
(22) Date of filing: 04.07.2001
(51) Int. Cl.: A01C 1/06

(54) **Sparkling envelopes**

(71) Applicant: Incotec International B.V., 1601 BL Enkhuizen (NL)
(72) Inventor: Tetteroo, Franciscus Abraham Antonius, 1602 GL Enkhuizen (NL); Legro, Robert Jean, 1602 DN Enkhuizen (NL)
(74) Representative: Prins, Adrianus Willem

(57) **Abstract**

The invention relates to methods for preparing coated seeds, coating compositions and coated seeds and provides a method for coating seeds and/or embryoids comprising flakes of a translucent polymeric film on an inert carrier.

## Description

The invention relates to methods for preparing coated seeds, coating compositions and coated seeds.

Seed coating is a practice which has become widespread. It is aimed at improving the germination characteristics, at providing various additives capable of intervening at any time during the formation and growth of plants, at protecting the seeds or at providing to the seed a shape or size which makes it suitable for automatic handling. Furthermore, additives are used which provide coated seeds with a reflecting appearance. An example of such an additive is mica which provides coated seeds with a relatively dim glow. Another example of an additive which is used to provide coated seeds with a reflecting appearance is aluminium. Although aluminium results, when compared to mica, in a more reflective appearance, the aluminium oxidises which does not make it useful for seed applications and furthermore aluminium can have a negative influence on the germination.

The present invention recognizes these problems and discloses methods for coating seeds and/or embryoids which provide seeds and/or embryoids with a light-reflecting appearance which are useful, for example, for cosmetic purposes, identification or recognition purposes and bird repellent purposes.

In a first embodiment the invention provides a method for coating seeds and/or embryoids comprising flakes of a translucent polymeric film on an inert carrier. Seeds are herein defined as raw and/or pelleted seeds (be it natural or artificial seeds). A method according to the invention is used to coat different types of seeds, such as the seeds of leguminous plants, graminaceae, solanaceae or asteraceae plants. In general, it is employed for the seeds of leguminous plants such as various kinds of peas, beans or alfalfa, the seeds of graminaceaea such as rye-grass and the cereals (maize, oat rye, wheat, sorghum, barley, rice and so on), the seeds of asteraceae plants such as lettuce, or the solanaceae such as the seeds of tobacco or tomato. Under certain conditions the somatic cells in a plant can resume cell division or differentiate into another cell-type. Plant cells also display this plasticity in cell culture. When a piece of plant tissue is cultured under appropriate conditions many of the cells are stimulated to divide which in the end leads to the formation of callus (a mass of relatively undifferentiated cells). By manipulating nutrients and growth regulators a whole new plant can be generated from a piece of callus. An embryoid (also called "artificial seed") is herein defined as callus material which has the capability to form a new plant. The flakes of a translucent polymeric film on an inert carrier are available in the art (for example from the manufactures Sigmund Linder, Germany, Special Chem s.r.l. Italy and Tabor Glit Italy,) and can be distinguished from each other on basis of, for example, their different carriers, different sizes, different colors (one basic color, mix of colors or even iridescent or hologramic), different thickness, different specific gravity and different shapes/forms (batches of flakes can comprise homogeneous and/or heterogeneous shapes/forms). It is clear to a person skilled in the art that only flakes resistant to the materials/substances used in coating procedures flakes compatible with the normally used coating procedures can be used in a method according to the invention. It is for example clear that a seed and/or embryoid coating procedure can comprise one or multiple drying step(s). This drying is applied during or after the coating procedure and temperatures range up to approximately 80°C. The applied temperature is typically dependent on the heat-resistance capabilities of a particular seed. It is therefor clear that preferably those flakes which are compatible with, for example, the applied drying temperature can be used in a method according to the invention. Preferably a method for coating seeds and/or embryoids (artificial seeds) according to the invention uses flakes of a translucent polymeric film on an inert carrier which comprise light-reflecting particles. An inert carrier is herein defined as a carrier which has no detectable, harmful consequences for the environment, in particular for the seed and/or embryoid or the outgrowing plant in the quantities present.

Preferably, an inert carrier is polyester-based or epoxy-based. Other carriers are, for example, based on polypropylene, PVC, polyester/acrylic resins, glass, polystyrol or PET. In a preferred embodiment the carrier is made of biodegradable material, for example cellulose, derivatives of cellulose like carboxy cellulose, lactic acid polymers and copolymers of lactic acid, glycolic acid and PLAGA. An advantage of a biodegradable carrier is the faster degradation of the carrier material under for example germination conditions compared to non-biodegradable carrier.

More preferably, a method for coating seeds and/or embryoids according to the invention further comprises a polymer (or binder, the words are used interchangeably herein). Preferably, said polymer is polyvinylalcohol. The person skilled in the art is aware of the huge array of other possible polymers and knows how to select the proper polymer for each application. Examples of other polymers are polyvinylpyrolidone, polyurethane, polyvinylacetate or alkyd. More preferably biodegradable polymers/binders are used, for example cellulose, acrylates and PLAGA. An advantage of a biodegradable polymer/binder is the faster degradation of the polymer/binder under for example germination conditions compared to non-biodegradable polymer/binder. Even more preferably, such a method according to the invention comprises a colorant which provide coated seeds and/or embryoids with a color. Colorants or dyes (the terms are used interchangeably herein) are commonly used in the seed coating technology and it is clear to a person skilled in the art that all commonly used colorants, for example a (organic) pigmentpaste, can be used in a method according to the invention. Better light-reflecting effects of flakes of a translucent polymeric film on an inert carrier are obtained by the use of a contrasting colorant.

In yet an even more preferred embodiment the invention provides a method for coating seeds and/or embryoids with a envelope (or coat, the terms are used interchangeably herein) further comprising at least one additive selected from the group of plant protection products, plant growth hormones, growth stimulants, fillers and fertilizers. Seeds and/or embryoids coated according to a method of the invention contain various additives. One such an additive is a plant protection product which gives protection to various harmful agents. Examples of plant protection products are insecticides, nematocides, fungicides, disinfectants, repellents, or bactericides. Another additive is a plant growth hormone. Plant growth hormones play a role in plant development. There are different classes of growth hormones (for example auxins, gibberellins, cytokinins, abscisic acid or ethylene) which in general are all small molecules which are easily be taken up from the envelope by a germinating seed or embryoid and perform all different kinds of functions (alone or in combination with each other). The addition of plant growth hormones to seed and/or embryoid coatings is used for example to stimulate root and/or shoot formation after germination. A growth stimulant is also added as an additive to the coat of seeds and/or embryoids. Growth stimulants are less defined extracts and in general it is not known which component or components give a beneficial effect to, for example, the germination of a seed or the growth of a plant. Growth stimulants can have an overlapping effect with the action of fertilizers and/or growth hormones. Typical examples of growth stimulants are seaweed or humic acid (a composition of different organic acids).

In another embodiment the invention provides the use of flakes of a translucent polymeric film on an inert carrier for providing seeds and/or embryoids with a light-reflecting appearance. As herein disclosed within the experimental part seeds and/or embryoids coated according to a method of the invention have a light-reflecting appearance. The overall light-reflecting appearance is, for example, dependent on the size of the flakes used in a method according to the invention. Flakes must not be too small otherwise the reflective appearance is not obtained and flakes must therefore be at least large enough to have their effect be noted by the human eye. Furthermore, a better light-reflective appearance is obtained when the flakes, present in the coating of a seed and/or embryoid, are free from each other (so preferably no overlap between the flakes). Flakes should typically be orientated with the reflective side parallel to the surface of the coat. When flakes are used which comprise light-reflective particles on only one side of the inert carrier the further orientation (which side is up) of the flakes is important. On the other hand, when both sides of the carrier material are equipped with light-reflective particles the further relative orientation of the flakes on the seeds and/or embryoids is not relevant. Furthermore, a method according to the invention should allow time for the flakes to adapt a proper appearance by allowing for example the dye or pigment to slide of the flakes. To provide a coated seed and/or embryoid batch with an overall light-reflecting appearance, not all seeds and/or embryoids need to comprise flakes of a translucent polymeric film on an inert carrier. An overall light-reflecting appearance is for example already obtained when one flake is present on every third coated seed and/or embryoid. A method according to the invention provide seeds and/or embryoids with a light-reflecting appearance which are useful for example, for cosmetic purposes, identification or recognition purposes and bird repellent purposes. Seeds and/or embryoids can also be coated according to a method of the invention with a partial coating to provide seeds and/or embryoids with a print for, for example, identification purposes. It is clear to a person skilled in the art that flakes capable of fluorescence or phosphorescence are also used in a method according to the invention.

In another embodiment the invention provides a coating composition which comprises flakes of a translucent polymeric film on an inert carrier. Preferably said carrier is polyester-based or epoxy-based. Preferable a coating composition according to the invention comprises a polymer (for example polyvinylalcohol). In a more preferred embodiment a coating composition according to the invention further comprises a colorant (for example a pigmentpaste). Even more preferably a coating composition according to the invention further comprises at least one additive selected from the group of plant protection products, plant growth hormones, growth stimulants, fillers and fertilizers.

It is generally known that filmcoating of seeds and/or embryoids can be performed in a number of different coating devices. Principally, distinction can be made between coating devices with simultaneous drying air like the "Side Vented Pan" coaters or the "Fluid Bed" coaters or the coating systems with either no drying or post-drying (separate drying phase following the coating phase) like on a conventional "coating drum with spray nozzles" or the "Rotary coaters".

Without the use of drying air the amounts of coating have to be relatively low to avoid an unacceptable increase in moisture in the seeds. This obviously will limit the use of polymer binder as well.
Other influences on the final amount of polymer binders are:
- seed and/or embryoid species (size, surface etc.)
- desired pesticides or other active material that has to be adhered to the seed and/or embryoid
- desired cosmetics (colorants and /or effect pigments)
- viscosity and sticking abilities of the binder

In general on the filmcoaters with drying the most valuable species/applications are coated and the used amounts of filmcoating liquids and thus of polymer binder will be highest. In coating systems where no drying is used and the use of filmcoating liquid is limited due to economics, the amounts of filmcoating liquids and thus polymer binder will be lowest. Table 1 shows examples of typically used binders/polymers as w/w % of seed in various coating systems. These amounts are used as a starting point to determine the optimal ratio of flakes to binder/polymer.

**Table 1**

| Examples of typical use of polymers/binders as w/w% of seed in various coating systems | | | | |
|---|---|---|---|---|
| **coating system** | **PVA** | **Cellulose** **(derivates)** | **PVP** | **PVAc** **(co/homopolymers)** |
| | | | | |
| Fluid bed | 0.3-6 | 0.1-3 | 0.3-6 | 0.6-10 |
| Side vented pan | 0.3-6 | 0.1-3 | 0.3-6 | 0.6-10 |
| | | | | |
| Coating drum | 0.005-0.2 | 0.002-0.1 | 0.005-0.2 | 0.03-6 |
| Rotary coater | 0.005-0.2 | 0.002-0.1 | 0.005-0.2 | 0.03-6 |
| PVA = polyvinylalcohol | | | | |
| PVP = polyvinylpyrollidone | | | | |
| PVAc = polyvinylacetate | | | | |

As disclosed herein within the experimental part the ratio of flakes of a translucent polymeric film on an inert carrier to polymer is dependent on the polymer used and may e.g. range from 0.6 g cellulose binder to 30 g polyvinylacetate binder to stick 40 g of glitter material to a coated seed.

It is clear to a person skilled in the art that to provide a coated seed and/or embryoid batch with an overall light-reflecting appearance, not all seeds and/or embryoids need to comprise flakes of a translucent polymeric film on an inert carrier. An overall light-reflecting appearance is for example already obtained when one flake is present on every third seed and/or embryoid. The upperlimit of the amount of glitter (when measured in surface area) used should preferably just exceed the total amount of seed and/or embryoid surface. Furthermore, to allow, for example water to enter the coated seed and/or embryoid the seed and/or embryoid should preferably not be completely covered by flakes.

In yet another embodiment the invention provides coated seeds and/or embryoids obtainable by a method according to the invention.

The invention will be explained in more detail in the following description, which is not limiting the invention.

### EXPERIMENTAL PART

### Experiment 1: Coating lettuce pellets with glitters: comparison with other effect pigments.

Lettuce pellets were made through conventional pelleting techniques. The pellets were dried at standard temperatures until they reached a wateractivity of 0.3. The dry pellets were used to coat glitter slurries on again according to standard well known filmcoating technologies.

After application of the glitter slurry the pellets were dried back again to a water activity of 0.3. The pellets were subsequently germinated in the greenhouse in pressed soilblock of standard peatmoss and in the laboratory on a thermogradient table.

**Table 2**

| **number** | **Binder** | **amount** (gram/unit) | **water** (gram) | **Glitter type** | **G/U** | **color** | **amount** (gram/unit) |
|---|---|---|---|---|---|---|---|
| 1.1055.813.02 | PVA | 60 | 140 | Poly ether X002C1 | 10 | | |
| 1.1055.813.03 | PVA | 60 | 100 | Idem | 50 | | |
| 1.1055.813.04 | PVA | 60 | 100 | Idem | 40 | white | 20 |
| 1.1055.813.05 | PVA | 60 | 100 | Idem | 40 | pink | 20 |
| 1.1055.813.06 | PVA+ mica | 160 | 40 | idem | 40 | | |
| 1.1055.813.07 | PVA | 60 | 100 | idem | 40 | black/ white | 10 10 |
| 1.1055.813.08 | PVA | 60 | 100 | Hologram glitter | 10 | | |
| 1.1055.813.09 | PVA | 60 | 100 | idem | 30 | | |
| 1.1055.813.10 | PVA | 60 | 100 | Mica | 40 | | |
| 1.1055.813.11 | PVA | 60 | 100 | idem | 20 | | |
| 1.1055.813.12 | PVA | 60 | 100 | Aluminium | 40 | | |
| 1.1055.813.13 | PVA | 60 | 100 | Idem | 20 | | |
| 1.1055.813.14 | PVA | 60 | 100 | idem | 40 | pink | 20 |
| 1.1055.813.15 | PVA | 60 | 100 | Mica | 40 | pink | 20 |
| 1.1055.813.16 | PVA | 60 | 100 | idem | 40 | | |
| 1.1055.813.17 | PVA | 60 | 100 | Aluminium | 40 | black | 20 |
| 1.1055.813.18 | PVA | 60 | 100 | idem | 10 | black | 20 |
| PVA= polyvinylalcohol | | | | | | | |
| G/U= gram/unit (100.000 pellets) | | | | | | | |
| Poly ether glitters and hologram glitters are both made by Special Chem s.r.l. | | | | | | | |

### Experiment 2: Effect of binder type and glitter type on coating glitters onto lettuce pellets

Lettuce pellets were made through conventional pelleting techniques. The pellets were dried at standard temperatures until they reached a wateractivity of 0.3. The dry pellets were used to coat glitter slurries on again according to standard well known filmcoating technologies. For the preparation of the glitter slurry several binder types and amount were used (see Table 3)

After application of the glitter slurry, the pellets were dried back again to a water activity of 0.3. The pellets were subsequently germinated in the greenhouse in pressed soilblock of standard peatmoss and in the laboratory on a thermogradient table.

**Table 3**

| **number** | **Binder** | **G/U** | **water** (gram) | **type** | **G/U** | **color** | **10.5G/U** |
|---|---|---|---|---|---|---|---|
| 1.1055.813.21 | PVA | 60 | 100 | Poly ester X002C1 | 40 | yellow | 20 |
| 1.1055.813.22 | PVP | 60 | 100 | Idem | 40 | yellow | 20 |
| 1.1055.813.23 | PVP | 20 | 100 | Idem | 40 | yellow | 20 |
| 1.1055.813.24 | PU | 30 | 100 | Idem | 40 | yellow | 20 |
| 1.1055.813.25 | PVAc | 60 | 100 | Idem | 40 | yellow | 20 |
| 1.1055.813.26 | PVAc | 60 | 100 | Idem | 40 | yellow | 20 |
| 1.1055.813.27 | AK | 60 | 100 | Idem | 40 | yellow | 20 |
| 1.1055.813.28 | HEC | 60 | 100 | Idem | 40 | yellow | 20 |
| 1.1055.813.29 | PVA | 60 | 100 | Idem | 80 | | |
| 1.1055.813.30 | PVA | 200 | | Idem | 80 | | |
| 1.1055.813.31 | PVA | 60 | 100 | Poly ester X025C1 | 40 | yellow | 20 |
| 1.1055.813.32 | PVA | 180 | | Idem | 20 | | |
| 1.1055.813.33 | PVA | 60 | 80 | Poly ester X002C3 | 40 | yellow | 20 |
| 1.1055.813.34 | PVA | 120 | 40 | Idem | 80 | | |
| 1.1055.813.35 | PVA | 100 | 40 | Idem | 80 | red | 20 |
| 1.1055.813.36 | PVA | 60 | 80 | Metal epoxy ME02C1 | 40 | red | 20 |
| 1.1055.813.37 | PVA | 60 | 80 | Metal epoxy ME15C1 | 40 | red | 20 |
| 1.1055.813.38 | PVA | 100 | 60 | Idem | 80 | | |
| 1.1055.813.39 | PVA | 100 | 60 | Metal epoxy ME02C1 | 80 | | |
| 1.1055.813.40 | PVA | 60 | 100 | Poly ester X002C1pr | 80 | | |
| G/U = gram /unit (100.000 pellets) | | | | | | | |
| PVA = polyvinyl alcohol | | | | | | | |
| PVP = Poly Vinyl Pyrolidone | | | | | | | |
| PU = polyurethane | | | | | | | |
| PVac = polyvinyl acetate | | | | | | | |
| AK = alkyd | | | | | | | |
| HEC = 1% hydroxy ethyl cellulose | | | | | | | |
| Poly ether glitters and metal epoxy glitters are made by Special Chem s.r.l. | | | | | | | |

### Experiment 3: Filmcoating different naked seed types with glitter slurries

Glitter slurries were mixed according to standard filmcoating practice. The slurries were applied to the naked seeds by standard filmcoating technologies like rotostat or pancoaters.

**Table 4**

| **number** | **species** | **glitter** | **Gram/kg** | **binder** | **Gram/kg** | **remark** |
|---|---|---|---|---|---|---|
| 1.1055.813.43 | Corn | Poly ester X002c1 | 5 | PVA | 30 | |
| 1.1055.813.44 | Corn | idem | 5 | PVA | 30 | 10 g white added |
| 1.1055.813.45 | Onion | idem | 5 | PVA | 30 | |
| 1.1055.813.46 | Onion | idem | 20 | PVA | 30 | |
| 1.1055.813.47 | Cabbage | idem | 5 | PVA | 30 | |
| 1.1055.813.48 | Beans | idem | 5 | PVA | 5 | |
| Poly ether glitters are made by Special Chem s.r.l. | | | | | | |
| PVA = polyvinylalcohol | | | | | | |

### RESULTS

### Experiment 1: Coating lettuce pellets with glitters: comparison with other effect pigments

Technically it is possible to coat lettuce pellets with different types of glitter material in different amounts. Object 1.1055.813.06 (see Table 2) gave technical problems, after 5 minutes in the rotating pan a lot of dust came of the pellets. It seems that under these conditions PVA and MICA are incompatible with the glitter.

However, the glitter effect of the X002C1 and the hologram glitter is significantly stronger, reflecting, sparkling compared to mica types and aluminium especially when colors were combined with the effect pigment.

Germination data of the greenhouse test as well as of the thermogradient table test (laboratory test) showed that the germination of the coated objects was not affected. The pellets coated with the glitters independent of type and amount of glitter germinated as well as the control pellets without any filmcoat.

### Experiment 2: Effect of binder type and glitter type on coating glitters onto lettuce pellets

In object 1.1055.813.23, 1.1055.813.24 and 1.1055.813.29 (all in Table 3) the glitter slurry had not enough binding capacity, glitters did not adhere to the pellets enough. These combinations need optimalisation. The germination data showed again no difference between the uncoated control seeds and the coated pellets. Photos were taken of object 1.1055.813.30 (Figure 1 and 2), 1.1055.813.39 (Figure 3 and 4) and 1.1055.813.40 (Figure 5).

### Experiment 3: Filmcoating different naked seed types with glitter slurries

Technically no difficulties were encounter during the coating of naked seeds with glitter/flake slurries. The ratio polymer/binder to glitter/flakes was adjusted to prevent stickiness or loss of glitter due to lack of binding capacity.

### DESCRIPTION OF FIGURES

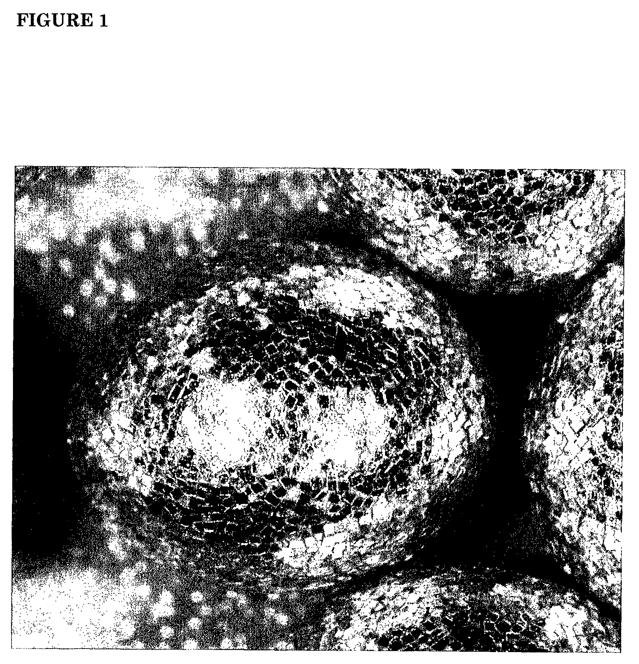

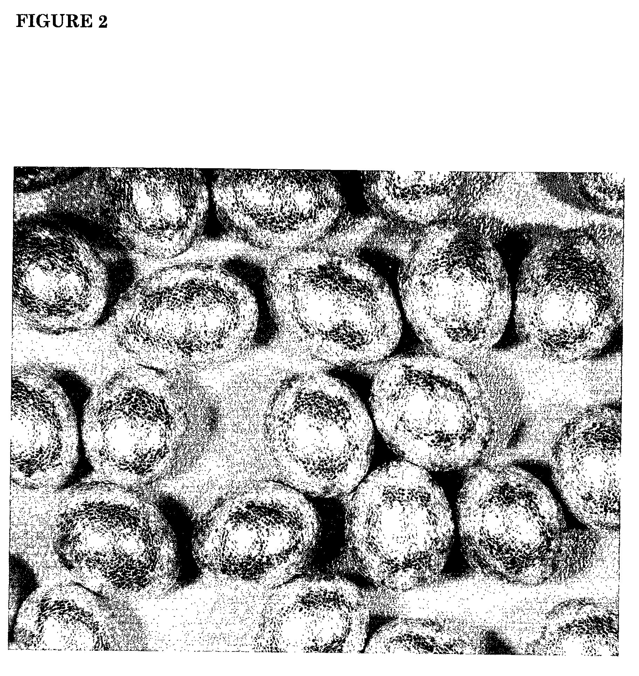

Figure 1 and 2: lettuce pellets coated with PVA and X002c1 (object 1.1055.813.30, see also Table 3). Figure 1 and 2 show photos taken with 2 different magnifications of the microscope.

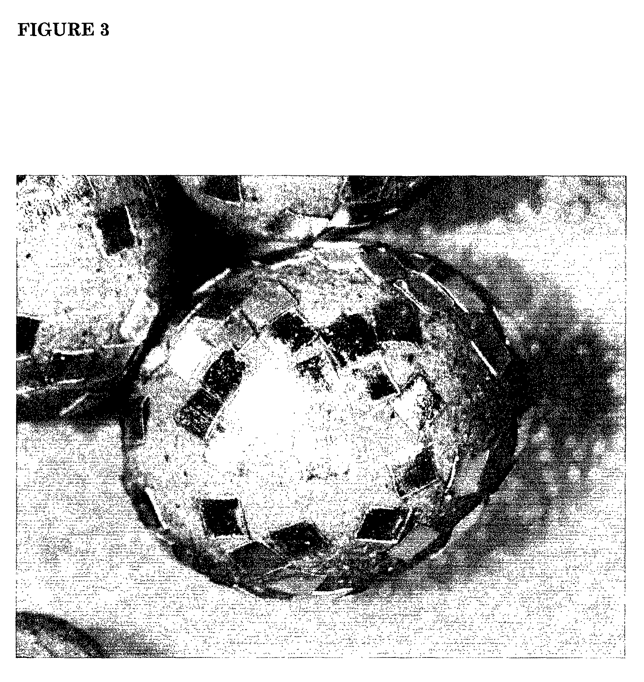

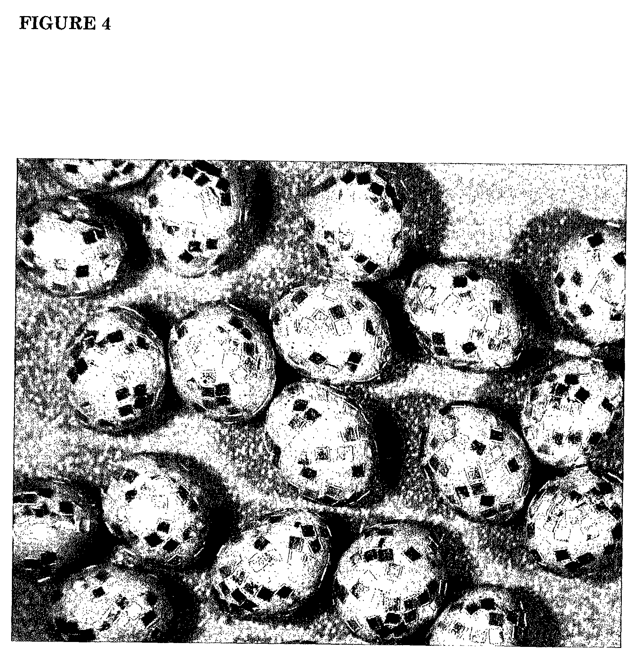

Figure 3 and 4: lettuce pellets coated with PVA and ME15c1 glitter (object 1.1055.813.39, see also Table 3). Figure 3 and 4 show photos taken with 2 different magnifications of the microscope.

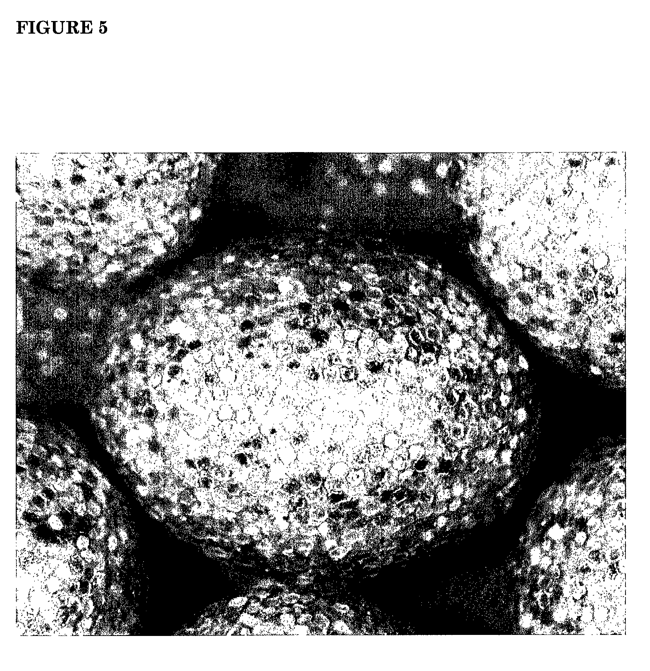

Figure 5: lettuce pellets coated with PVA and X002c1pr (object 1.1055.813.40, see also Table 3)

## Claims

1. A method for coating seeds and/or embryoids comprising flakes of a translucent polymeric film on an inert carrier.

2. A method for coating seeds and/or embryoids according to claim 1 wherein said translucent polymeric film comprises light-reflecting particles.

3. A method for coating seeds and/or embryoids according to claim 1 or 2 wherein said carrier is polyester-based or epoxy-based.

4. A method for coating seeds and/or embryoids according to anyone of claims 1 to 3 further comprising a polymer.

5. A method for coating seeds and/or embryoids according to claim 4 wherein said polymer is polyvinylalcohol.

6. A method for coating seeds and/or embryoids according to anyone of claims 1 to 5 further comprising a colorant.

7. A method for coating seeds and/or embryoids according to claim 6 wherein said colorant is a pigmentpaste.

8. A method for coating seeds and/or embryoids according to anyone of claims 1 to 7 further comprising at least one additive selected from the group of plant protection products, plant growth hormones, growth stimulants, fillers and fertilizers.

9. Use of flakes of a translucent polymeric film on an inert carrier for providing seeds and/or embryoids with a light-reflecting appearance.

10. A coating composition comprising flakes of a translucent polymeric film on an inert carrier.

11. A coating composition according to claim 10 wherein said carrier is polyester-based or epoxy-based.

12. A coating composition according to claim 10 or 11 further comprising a polymer.

13. A coating composition according to claim 12 wherein said polymer is polyvinylalcohol.

14. A coating composition according to anyone of claims 10 to 13 further comprising a colorant.

15. A coating composition according to claim 14 wherein said colorant is pigmentpaste.

16. A coating composition according to anyone of claims 10 to 15 further comprising at least one additive selected from the group of plant protection products, plant growth hormones, growth stimulants, fillers and fertilizers.

17. Use of a coating composition according to anyone of claims 10 to 16 for providing seeds and/or embryoids with a light-reflecting appearance.

18. Coated seeds and/or embryoids obtainable according to any of claims 1 to 8.
